# EUROPEAN PATENT APPLICATION

(11) **EP 1 052 015 A1**
(43) Date of publication of application: **15.11.2000**
(21) Application number: 98947866.4
(22) Date of filing: 14.10.1998
(51) Int. Cl.: B01J 23/85, C10G 45/08

(54) **HYDROTREATING CATALYST FOR HEAVY OIL, CARRIER FOR THE CATALYST, AND PROCESS FOR THE PREPARATION OF THE CATALYST**

(30) Priority: 14.10.1997 JP 29500897
(71) Applicant: JAPAN ENERGY CORPORATION, Tokyo 105-0001 (JP)
(72) Inventor: MATSUSHITA, Koichi, Japan Energy Corporation, Toda-shi, Saitama 335-8502 (JP)
(74) Representative: Koepe, Gerd L., Dipl.-Chem.
(86) International application number: JP9804638
(87) International publication number: WO9919061

(57) **Abstract**

A catalyst for hydrogenating heavy oils comprises an alumina carrier and a Group 6 metal component supported together with a Group 9 or 10 metal component on the carrier. The alumina carrier contains silica in an amount of 0.5 to 20 wt% in relation to catalyst weight. Silica is dispersed in the carrier as a silica moiety with a mean particle diameter of 0.05 to 1 µm. The catalyst has a pore diameter distribution such that the median pore diameter of pores having diameters of 600 Å or less is 70 Å or greater but less than 150 Å. Excellent denitrogenation characteristics and desulfurization characteristics are maintained for a long time when a hydrodemetallated heavy oil is hydrogenated.

## Description

### TECHNICAL FIELD

The present invention relates to a heavy oil hydrogenation catalyst, and more particularly to a heavy oil hydrogenation catalyst and a method for manufacturing the hydrogenation catalyst that allow an oil product low in sulfur and nitrogen to be obtained with high efficiency by the hydrogenation of heavy oil, and equipment breakage or lower activity resulting from coke formation to be reduced.

### BACKGROUND ART

In conventional practice, it is desired that heavy oil is refined with a high degree of desulfurization, demetallization, denitrogenation, and cracking during hydrogenation of the heavy oil, and it is known that performing treatments at comparatively high reaction temperatures is effective in such cases. When a hydrogenation treatment is performed at a high reaction temperature, however, sludge forms, and it deposits on the catalyst as coke, bringing about reduced activity. This is disadvantageous in that the refining equipment becomes incapable of operating for a long time, and productivity decreases. Numerous proposals have been made concerning techniques for reducing the production of sludge during the hydrogenation of heavy oil, but these techniques are not entirely effective, result in reduced heavy oil throughput, involve high outlays, or have other drawbacks.

As described, for example, in Japanese Patent Publication No. 4-46619, a catalyst obtained by a process in which a silica sol with a mean particle diameter of less than 10 nm is added to and mixed with an alumina hydrate to prepare a silica-containing alumina carrier, and an active metal is supported thereon has been proposed as a catalyst for hydrogenating vacuum gas oil. In particular, it is indicated in this publication that using a silica sol with a mean particle diameter of 15 nm (comparison 2) produces lower deactivation than using a silica sal with a mean particle diameter of 7 nm (examples 1 and 2) or a silica sal with a mean particle diameter of 4 nm (example 3).

It is also believed that when a silica-containing catalyst is used for the hydrogenation of heavy oil or another high-molecular-weight product because of the higher acidity of silica in comparison with that of alumina, the activity of the catalyst decreases very rapidly and catalyst life is hence reduced due to the increased cracking of heavy oil and rapid coke formation. Based on the information obtained by the inventors, therefore, there are as yet no known examples in which a catalyst obtained by supporting active components on a silica-containing alumina carrier would be able to operate stably for a long time when used for the hydrogenation of heavy oil.

It is an object of the present invention to provide a hydrogenation catalyst, a catalyst carrier, and a catalyst manufacturing method that allow an oil product low in sulfur and nitrogen to be obtained by maintaining high desulfurization and denitrogenation activity, and that allow equipment breakage or activity deterioration resulting from coke formation to be reduced, making it possible to achieve an extended operating time.

Another object of the present invention is to provide a novel catalyst carrier, catalyst, and manufacturing method therefor that allow adequate desulfurization and denitrogenation activity to be maintained for a long time during the hydrogenation of heavy oil, and particularly a heavy oil whose 50% distillation temperature is 450°C or higher.

### DISCLOSURE OF THE INVENTION

According to a first aspect of the present invention, a hydrogenation catalyst for heavy oil having a catalyst carrier and an active components supported thereon is provided, wherein the catalyst has the following features a) to d).
a) The catalyst carrier contains 0.5 to 20 wt% silica in relation to catalyst weight.
b) The silica is dispersed in the carrier as a silica moiety with a mean particle diameter of 0.05 to 1 µm.
c) The active components comprise Group 6 metal components and Group 9 or 10 metal components.
d) In a pore distribution measured by nitrogen adsorption method, the median pore diameter of pores having diameters of 600 Å or less is 70 Å or greater but less than 150 Å.

As noted above, although carriers containing added silica are known to be used in the hydrogenation of vacuum gas oil, it has been still believed that alumina carriers containing added silica are unsuitable for the hydrogenation of heavy oil. According to a study conducted by the inventors, however, the life of a catalyst used for the hydrogenation of heavy oil can be extended by dispersing a silica moiety with a mean particle diameter of 0.01 to 1 µm in a carrier, and, in particular, excellent desulfurization and denitrogenation characteristics can be maintained when a hydrodemetallated heavy oil is hydrogenated, and these characteristics can be maintained for a comparatively long time. Although the reasons for this effect are not entirely clear, the inventors will venture the following explanation. Coke produced by heavy oil cracking commonly accumulates on the pore surface of the catalyst and tends to impair the catalytic functions of active components. With the catalyst of the present invention, however, the accumulation of coke in the pores is probably inhibited by the dispersion of silica in the carrier at a prescribed particle diameter.

In the catalyst for the hydrogenation of heavy oil in accordance with the present invention, the mean particle diameter of the silica moiety should preferably be 0.1 to 0.8 µm. It is also preferable for the aforementioned pore distribution to be such that the average diameter of pores whose diameters are 600 Å or less is 80 Å or greater but less than 100 Å. Heavy oil whose 50% distillation temperature is 450°C or higher is particularly suitable for being hydrogenated with the catalyst of the present invention.

According to a second aspect of the present invention, a hydrogenation catalyst carrier is provided, which contains silica in an amount of 0.5 to 25 wt% of weight of the carrier, the silica being dispersed in the carrier as a silica moiety with a mean particle diameter of 0.05 to 1 µm. This catalyst carrier is suitable for hydrogenation catalysts of the heavy oil.

According to a third aspect of the present invention, a method for manufacturing a hydrogenation catalyst is provided such that this method has the following features a) to c).
a) A mixture is prepared from an alumina precursor comprising an aluminum hydrous oxide and/or an aluminum hydroxide, and a silica with a mean particle diameter of 1 µm or less in an amount of 0.5 to 20 wt% in relation to weight of the catalyst.
b) The resulting mixture of the silica and the alumina precursor is kneaded and baked to obtain a carrier under conditions in which the median pore diameter of pores having diameters of 600 Å or less in a pore distribution measured by nitrogen adsorption method is 70 Å or greater but less than 150 Å.
C) Group 9 metal components or Group 10 metal components, and Group 6 metal components are supported on the resulting carrier.

With a catalyst manufactured by the manufacturing method of the present invention, coke accumulation is reduced during the hydrogenation of heavy oil, and adequate desulfurization characteristics and denitrogenation characteristics can be maintained for a long time. In the manufacturing method of the present invention, the mean particle diameter of the silica is preferably 10 to 50 nm.

### BEST MODE FOR CARRYING OUT THE INVENTION

An aluminum hydrous oxide and/or aluminum hydroxide may be used as the aluminum precursor constituting the catalyst carrier of the present invention. It is appropriate to employ a product mainly composed of aluminum hydrous oxide (alumina hydrate) having a boehmite structure such as pseudo-boehmite used as a hydrorefining catalyst. Such products can be fabricated by an aluminum sulfate technique, aluminum chloride technique, alhol technique, or other known technique, or can be readily obtained as commercially available products. The desired pore distribution is easily obtained if the mean particle diameter of the aluminum hydrous oxide is 5 to 1000 nm, and particularly 5 to 200 nm.

Commercially available silica may be used, but using a silica whose mean particle diameter is 1 µm or less fails to provide adequate dispersibility or to render an effect of the addition of the silica. A silica with a mean particle diameter of 5 to 200 nm is preferred, and one with a mean particle diameter of 10 to 50 nm is particularly preferred. The silica should preferably be used in the form of silica sol when mixed with the aluminum precursor, but acid silica or basic silica may also be used.

The carrier in which the silica moiety of the present invention has been dispersed can be prepared by mixing an aluminum precursor and silica and kneading/baking the product. Specifically, the carrier can be prepared by a process in which a prescribed amount of silica is added to an aluminum hydrous oxide, the ingredients are thoroughly kneaded together, the blend is then formed, the formed article is dried at a temperature ranging from ambient temperature to 150°C, preferably 100 to 130°C, and the dried article is baked for 0.5 hour or longer at 350 to 800°C, preferably for 0.5 to 5 hours at 450 to 600°C. In this case, bringing the silica content of the carrier to 1 wt% or lower fails to afford sufficiently high hydrogenation activity, whereas bringing the content to 25 wt% or higher fails to yield the desired catalyst pore structure and sometimes makes even forming itself impossible, resulting in lower catalyst strength. A range of 1 to 20 wt% is even more preferred for the silica content of the carrier. Based on the weight of the entire catalyst, the silica content should be 0.5 to 20 wt%, and preferably 5 to 15 wt%.

The active metals used for the catalyst of the present invention include at least one of Group 6 metal elements of the Periodic Table, preferably molybdenum or tungsten, at least one Group 9 or 10 metal elements of the Periodic Table, preferably nickel or cobalt, or both.

A commonly used method, such as one in which the carrier is impregnated with an aqueous solution containing the aforementioned metal elements, may be used to support these metals on the carrier. The impregnated carrier is subsequently dried at a temperature ranging from normal temperature to 150°C, preferably 100 to 130°C and baked for 0.5 hour or longer at 350 to 800°C, preferably for 1 to 5 hours at 450 to 600°C. In this case, the Group 6 metal elements should be used as aqueous solutions of ammonium paramolybdate, paramolybdic acid, ammonium molybdate, phosphomolybdic acid, ammonium tungstate, tungstic acid, tungstic anhydride, phosphotungstic acid, and other compounds. In addition, the Group 9 or 10 metal elements are used as aqueous solutions of nickel or cobalt nitrates, sulfates, chlorides, fluorides, bromides, acetates, carbonates, phosphates, and the like. From the standpoint of desulfurization, denitrogenation, and other types of hydrorefining, these metal elements should preferably be supported such that the total amount of metal in relation to the final catalyst composition is 3 to 15 wt%, preferably 5 to 15 wt%, for Group 6 metal elements, and 0.5 to 5 wt%, preferably 1 to 3 wt%, for Group 9 or 10 metal elements. The metals may be supported by adding the metal elements during the mixing and kneading of the aluminum precursor and silica.

The catalyst of the present invention should have the following physical properties. Measured by nitrogen adsorption method, the pore distribution should be such that the median pore diameter of pores having diameters of 600 Å or less is 70 Å or greater but less than 150 Å, and preferably 80 Å or greater but less than 100 Å. In particular, the volume of pores whose size is within ±20% of the median pore diameter should preferably constitute at least 60% of the volume of pores whose diameters are 600 Å or less. This is because a catalyst whose median pore diameter is less than 70 Å has low desulfurization and denitrogenation activity, whereas a catalyst whose median pore diameter exceeds 150 Å has low desulfurization and denitrogenation activity and deteriorates quickly due to the deposition of coke or the metal contained in the feed oil. To achieve high desulfurization activity, it is preferable for the volume of pores whose median pore diameter is 80 Å or greater but less than 100 Å and whose size is within ±20% of the median pore diameter to constitute at least 60% of the entire volume of pores whose diameters are 600 Å or greater. The catalyst of the present invention may also contain pores whose diameter is more than 600 Å which diameters are difficult to measure by nitrogen adsorption method.

A silica moiety with a mean particle diameter of 0.01 to 1 µm is dispersed in the carrier of the present invention. By subjecting a cross section of the carrier to a compositional analysis by EPMA or the like, it is possible to detect this silica moiety as a region essentially containing silicon as the metal component. Particle diameter (grain size) can be measured as the representative length of the region in which this silica moiety is dispersed. For example, the particle diameter can be specified on the basis of a diameter of a circular shape that approximates the dispersion region. The mean particle diameter should be 0.05 to 1 µm, and preferably 0.1 to 0.8 µm. A coarse-grained starting material should preferably be avoided. Specifically, the amount of silica contained in a particle diameter fraction of 5 µm or less should be 5 wt% or lower, and preferably 1 wt% or lower, in relation to the total catalyst amount. In addition, the carrier of the present invention is commonly formed into cylinders, spheres, or other shapes measuring about 0.5 to 5 mm.

The catalyst of the present invention can be used on a wide scale with heavy oils whose 50% distillation temperature is 450°C or higher, such as various heavy distillates or residues obtained by distilling crude oil, tar sand, shale oil, coal liquid, or the like at atmospheric or vacuum pressure, or heavy oils obtained by subjecting these to cracking, isomerization, reforming, solvent extraction, and other treatments. The catalyst is particularly suitable for demetallated heavy oil obtained by subjecting a vacuum residue, an atmospheric residue, or the like to hydrodemetallization with the aid of a demetallization catalyst. The following products should be used as the demetallization catalysts in this case: catalysts obtained by supporting at least one Group 6 metal element (preferably molybdenum) of the Periodic Table in an amount of 1 to 8 wt% (in terms of metal) on a porous inorganic oxide carrier composed of alumina, alumina-silica, or the like; or catalysts obtained by supporting at least one Group 6 metal element (preferably molybdenum) and at least one Group 9 or 10 metal element (preferably nickel and/or cobalt) in amounts of 3 to 15 wt% and 1 to 5 wt%, respectively (in terms of metal).

The following conditions are preferred when heavy oil is hydrogenated using the catalyst of the present invention: a reaction temperature of 300 to 450°C, a hydrogen partial pressure of about 30 to 200 kg/cm², a liquid space velocity of about 0.1 to 10 hr⁻¹, and a hydrogen-to-heavy oil ratio of about 100 to 4000 L/L. The following conditions are particularly preferred: a reaction temperature of 350 to 420°C, a hydrogen partial pressure of about 70 to 180 kg/cm², a liquid space velocity of about 0.2 to 1.0 hr⁻¹, and a hydrogen-to-heavy oil ratio of about 500 to 1000 L/L. Before being used to treat hydrocarbons, the catalyst may be pre-sulfurized under common conditions with hydrocarbons containing sulfur compounds such as hydrogen sulfide and carbon disulfide.

### [Examples]

The present invention will now be described in further detail through examples, but these examples do not limit the scope of the present invention in any way.

### [Preparation of Catalyst A]

Deionized water (250 mL) and a nitric acid aqueous solution (1 L) with a concentration of 4.0 wt% were added to 2.0 kg alumina hydrate (moisture content: 25 wt%), silica (Silicadol 30A; average particle diameter: 17 nm; manufactured by Nippon Chemical Industrial) was added in an amount of 52 g (1 wt% in terms of the silica content of the carrier), and the ingredients were mixed and kneaded for 120 minutes while deionized water was appropriately added to render the moisture content of the mixture suitable for forming. In this case, alumina hydrate was used as the pseudo-boehmite, and the particle diameter of the starting material powder was calculated based on the specific surface determined by the BET technique.

The mixture was subsequently formed with the aid of an extruder into a cylinder with a diameter of 1/32 inch (about 0.79 mm). The formed pellets were dried at 130°C and then baked for 1 hour at 600°C, yielding a carrier.

The carrier was impregnated with an aqueous solution of ammonium molybdate and an aqueous solution of nickel nitrate, dried at 130°C, and baked for 30 minutes at 550°C, yielding catalyst A. The impregnation process was adjusted such that the final content (metal weight) of molybdenum and nickel in the catalyst was 8 and 2.2 wt%, respectively.

### [Preparation of Catalyst B]

Catalyst B was prepared by the same method as catalyst A above, except that 1.9 kg alumina hydroxide and 530 g silica (which corresponded to 10 wt% in terms of the silica content of the carrier) were used in the mixing step of the carrier preparation process, and the concentration of the nitric acid aqueous solution was set to 4.25 wt%.

### [Preparation of Catalyst C]

Catalyst C was prepared by the same method as catalyst A above, except that 1.75 kg alumina hydroxide and 1100 g silica (which corresponded to 20 wt% in terms of the silica content of the carrier) were used in the mixing step of the carrier preparation process, and the concentration of the nitric acid aqueous solution was set to 4.5 wt%.

### [Preparation of Catalyst D]

Catalyst D was prepared by the same method as catalyst B above, except that 2.0 kg alumina hydroxide alone was used in the mixing step of the carrier preparation process, the silica was dispensed with, and the concentration of the nitric acid aqueous solution was set to 3.75 wt%.

### [Preparation of Catalyst E]

Catalyst E was prepared by the same method as catalyst A above, except that 1.9 kg alumina hydroxide and 170 g (10 wt% in terms of the silica content of the carrier) silica (Nipsil LP; average particle diameter: 13 µm; manufactured by Nippon Silica Kogyo) were used in the mixing step of the carrier preparation process, and the concentration of the nitric acid aqueous solution was set to 4.25 wt%. The silica used in the preparation of catalysts A to D was silica sol, as opposed to the use of silica gel for catalyst E.

### [Measurement of Catalyst Pore Structure]

The pore structure distributions of the catalysts A to E prepared as described above were measured by nitrogen adsorption method. The results are shown in Table 1.

**Table 1**

| Catalyst | A | B | C | D | E | F |
|---|---|---|---|---|---|---|
| SiO₂ in carrier (wt%) | 1 | 10 | 20 | 0 | 10 | - |
| Average particle diameter of SiO₂ (µm) | 0.017 | 0.02 | 0.02 | - | 13 | - |
| Average particle diameter of SiO₂ in catalyst (µm) | 0.5 | 0.5 | 0.8 | - | 5 | - |
| Mean pore diameter (Å) | 87 | 91 | 89 | 90 | 88 | 170 |
| Volume of pores ⌀50 ± 20 Å (%) (*3) | 78 | 74 | 74 | 75 | 74 | - |

### [Measurement of Silica Moiety in Carrier]

Cross sections of the above-described catalysts A, B, C, and E were analyzed by EPMA to determine their compositions. The mean particle diameters of the silica moiety determined based on the areas of silicon thus detected were 0.5, 0.5, 0.8, and 5 µm for catalysts A, B, C, and E, respectively. In addition, areas of silicon with a particle diameter of 5 µm or greater were absent from catalysts A, B, and C.

### [Evaluation Testing of Hydrodesulfurization Activity]

Middle-East atmospheric residue was used as the feed oil, and hydrodesulfurization activity was evaluated using catalysts A, B, and C (example 1) and catalysts D and E (comparison 1). A fixed-bed reactor was used in the evaluation testing, the residual sulfur content (wt%) of hydrorefined oil was measured, and the relative activities of the catalysts were evaluated on the basis of reaction velocity constants obtained using the measurement results.

Table 2 shows the properties of feed oils, and Table 3 (conditions 1) shows the testing conditions of the hydrorefining reactions. In addition, Table 4 shows evaluation results pertaining to relative desulfurization activity, and the sulfur content of product oils following 20 and 200 hours of treatment with catalysts A to E. In Table 4, catalysts A, B, and C pertain to example 1, whereas catalysts D and E pertain to comparison 1. Table 4 also shows coke accumulation in 200 hours. Coke accumulation was determined by a technique in which catalyst weight prior to the test was subtracted from the catalyst weight obtained after the catalyst was washed with toluene 200 hours later.

**Table 2**

| Feed oil | Middle-East atmospheric residue | Middle-East vacuum residue |
|---|---|---|
| Sp. Gr (15°C) | 0.961 | 1.030 |
| S (wt%) | 3.33 | 5.71 |
| N (wt%) | 0.19 | 0.36 |
| V (wt ppm) | 32 | 117 |
| Ni (wt ppm) | 9 | 51 |

**Table 3**

| | Conditions 1 | Conditions 2 |
|---|---|---|
| Reaction pressure (kg/cm²) | 120 | 140 |
| Hydrogen/feed oil ratio (L/L) | 1000 | 670 |
| Liquid space velocity (hr⁻¹) | 1.0 | 0.3 |
| Reaction temperature (°C) | 380 | 380 |

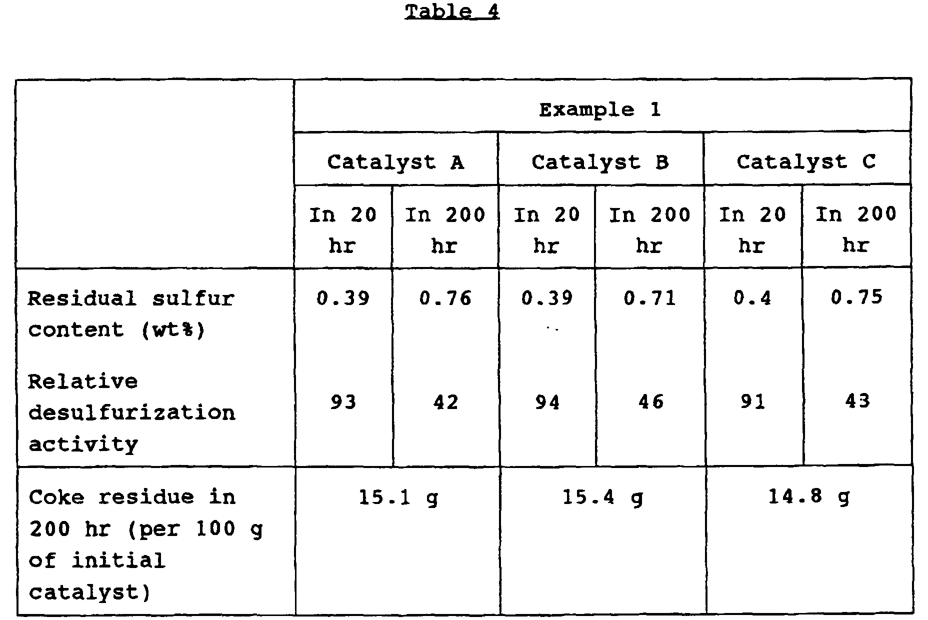

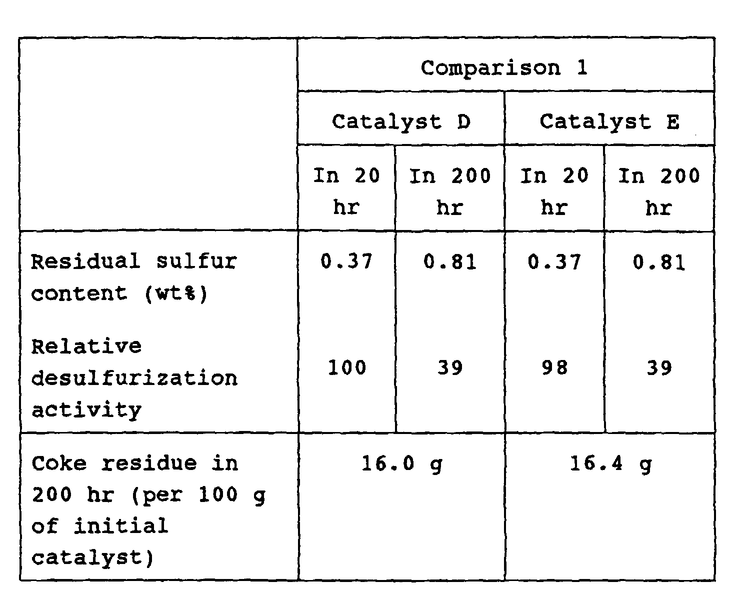

The results in Table 4 demonstrate that catalysts A to C produce less coke accumulation in 200 hours than catalyst D or E. It can also be seen that in comparison with catalysts D and E, catalysts A to C have slightly lower initial desulfurization activity, but lower deterioration of their catalytic activity.

### [Preparation of Demetallization Catalyst F]

Deionized water (800 mL) and an ammonia aqueous solution (1 L) with a concentration of 1 wt% were added to 2 kg alumina hydrate (moisture content: 25 wt%), and the ingredients were mixed for 60 minutes while deionized water was appropriately added to render the moisture content of the mixture suitable for forming.

The mixture was subsequently formed with the aid of an extruder into a cylinder with a diameter of 1/20 inch (1.27 mm), dried at 130°C, and then baked far 1 hour at 600°C, yielding a carrier.

The carrier was impregnated with an aqueous solution of ammonium molybdate, dried at 130°C, and baked for 30 minutes at 550°C, yielding catalyst F. The impregnation process was adjusted such that the final content (metal weight) of molybdenum in the catalyst was 2.7 wt%.

### [Evaluation Testing of Hydrorefining]

A fixed-bed reactor comprising a first stage and a second stage was prepared, catalyst F was used for the first stage, catalyst B (example) and catalyst D (comparison) were used for the second stage, a Middle-Eastern vacuum residue was used as the feed oil, and hydrorefining was evaluated. The evaluation was conducted by a method in which the residual nitrogen content (wt%) and residual sulfur content (wt%) of hydrorefined oil were measured following 20 and 500 hours, and the relative activities of the catalysts were evaluated on the basis of reaction velocity constants obtained using these measurement values. In addition, specific gravity (g/mL), kinematic viscosity (cSt) at 100°C, and residual carbon content (wt%) were measured to analyze the composition of the oil products.

Table 2 shows the properties of feed oils, and Table 3 (conditions 2) shows the testing conditions for the hydrorefining reactions. In addition, Table 5 shows the residual sulfur content, residual nitrogen content, and residual metal content (V + Ni) of product oils following 20 and 500 hours; evaluation results pertaining to the relative activities of desulfurization, denitrogenation, and demetallization; and the specific gravity, kinematic viscosity, residual carbon content, and residual carbon removal ratio of the product oils. Table 5 also shows the cracking ratios of 360°C and higher distillates following 20 and 500 hours.

**Table 5**

| | Example 3 (catalyst F + catalyst B) | | Comparison 3 (catalyst F + catalyst D) | |
|---|---|---|---|---|
| | In 20 hr | In 500 hr | In 20 hr | In 500 hr |
| Residual sulfur content (wt%) | 0.75 | 1.13 | 0.81 | 1.29 |
| Relative desulfurization activity | 112 | 65 | 100 | 52 |
| Residual nitrogen content (wt%) | 0.21 | 0.24 | 0.21 | 0.31 |
| Relative denitrogenation activity | 100 | 80 | 100 | 25 |
| Residual metal content (wt ppm) | 42 | 49 | 41 | 49 |
| Relative demetallization activity | 99 | 90 | 100 | 88 |
| Specific gravity (15°C) (g/mL) | 0.946 | 0.957 | 0.950 | 0.962 |
| Kinematic viscosity (cSt) | 45 | 58 | 40 | 54 |
| CCR (wt%) | 8.4 | 10.2 | 8.1 | 11.3 |
| Residual carbon removal ratio (%) | 60 | 51 | 61 | 46 |
| 360°C + distillate cracking ratio (%) | 8.05 | 7.85 | 7.24 | 6.94 |

The results in Table 5 indicate that when applied to a heavy oil that has undergone a hydrodemetallization treatment step, a catalyst obtained using a carrier having a silica content of 10 wt% has higher desulfurization and denitrogenation activity and lower deterioration of the catalytic activity in 500 hours than a catalyst obtained using a carrier containing 100 wt% alumina. Reduction in demetallization activity was also smaller for the catalyst of the example than for the conventional catalyst of the comparison. It can thus be concluded that using the catalyst of the present invention makes it possible to produce high-quality heavy oil in a stable manner.

It should also be noted that in comparison with the conventional type of catalyst, the catalyst of the example affords a higher cracking ratio for a heavy distillate of 360°C or higher. Specifically, the catalyst of the present invention can maintain satisfactory desulfurization and denitrogenation characteristics for a long time because the accumulation of decomposed coke is inhibited while the heavy distillate is decomposed at a comparatively high cracking ratio. This indicates that the catalyst of the present invention is advantageous in that the hydrogenation of heavy oil can produce middle distillates, which are products of high added value.

The above-described results demonstrate that a catalyst composition obtained by supporting Group 6 metal elements of the Periodic Table together with Group 9 and 10 metal elements on a carrier obtained by adding silica of prescribed particle diameter in an amount of 10 wt% following a hydrodemetallization treatment is highly suitable as a catalyst composition for the hydrorefining of heavy oils and that, in particular, this composition allows purified heavy oil having excellent properties to be produced in a stable manner over extended periods of time.

### INDUSTRIAL APPLICABILITY

The catalyst of the present invention is highly advantageous in that it allows heavy oil to be hydrorefined in an efficient manner due to the high hydrorefining activity thereof, and catalyst life to be extended and the equipment to be operated for a longer time due to reduced coke formation. In addition, the catalyst carrier of the present invention is useful for heavy oil hydrogenation catalysts.

## Claims

1. A catalyst for hydrogenation of heavy oil, having a catalyst carrier and an active component supported thereon, wherein:
the catalyst carrier contains 0.5 to 20 wt% silica of weight of the catalyst, the silica being dispersed in the carrier as a silica moiety with a mean particle diameter of 0.05 to 1 µm;
the active component comprises a Group 6 metal component and a Group 9 or 10 metal component; and
a median pore diameter of pores having diameters of 600 Å or less is 70 Å or greater but less than 150 Å in a pore distribution measured by nitrogen adsorption method.

2. A catalyst for hydrogenation of heavy oil as defined in claim 1, wherein the mean particle diameter of the silica moiety is 0.1 to 0.8 µm.

3. A catalyst for hydrogenation of heavy oil as defined in claim 1, wherein the pore distribution is such that the average diameter of pores whose diameters are 600 Å or less is 80 Å or greater but less than 100 Å.

4. A heavy oil hydrogenation catalyst as defined in any one of claims 1 to 3, wherein the 50% distillation temperature of said heavy oil is 450°C or higher.

5. A catalyst for hydrogenation of heavy oil as defined in any one of claims 1 to 3, wherein the heavy oil is subjected to a demetallization treatment in advance.

6. A hydrogenation catalyst carrier, comprising silica in an amount of 0.5 to 25 wt% of weight of the carrier, wherein the silica is dispersed in the carrier as a silica moiety with a mean particle diameter of 0.05 to 1 µm.

7. A hydrogenation catalyst carrier as defined in claim 6, wherein the mean particle diameter of said silica moiety is 0.1 to 0.8 µm.

8. A method for manufacturing a hydrogenation catalyst, comprising:
mixing an alumina precursor comprising an aluminum hydrous oxide and/or an aluminum hydroxide, and a silica with a mean particle diameter of 1 µm or less in an amount of 0.5 to 20 wt% of weight of the catalyst;
kneading and baking a resulting mixture of the silica and the alumina precursor to produce a carrier under conditions in which a median pore diameter of pores having diameters of 600 Å or less in a pore distribution measured by nitrogen adsorption method is 70 Å or greater but less than 150 Å; and
supporting a Group 9 metal component or Group 10 metal component, and a Group 6 metal component on the carrier.

9. A method for manufacturing a hydrogenation catalyst as defined in claim 8, wherein the mean particle diameter of the silica is 10 to 50 nm.
